Europäisches Patentamt

European Patent Office

Office européen des brevets

(19)

(11) Numéro de publication : **0 390 615 B1**

(12) **FASCICULE DE BREVET EUROPEEN**

(45) Date de publication du fascicule du brevet :
**09.12.92 Bulletin 92/50**

(21) Numéro de dépôt : **90400100.5**

(22) Date de dépôt : **15.01.90**

(51) Int. Cl.⁵ : **G01D 5/26**

(54) **Dispositif de mesure opto-électronique.**

(30) Priorité : **18.01.89 FR 8900541**

(43) Date de publication de la demande :
**03.10.90 Bulletin 90/40**

(45) Mention de la délivrance du brevet :
**09.12.92 Bulletin 92/50**

(84) Etats contractants désignés :
**AT BE CH DE DK ES FR GB GR IT LI LU NL SE**

(56) Documents cités :
**EP-A- 0 013 974
DE-A- 1 623 156
GB-A- 2 144 534
GB-A- 2 179 146**

(73) Titulaire : **PHOTONETICS
52 Avenue de l'Europe
F-78160 Marly le Roi (FR)**

(72) Inventeur : **Graindorge, Philippe
5, rue du Crucifix
F-21800 Crimolois (FR)**
Inventeur : **Trouchet, Denis
79 Route de Sartrouville
F-78230 Le Pecq (FR)**

(74) Mandataire : **Michelet, Alain et al
Cabinet Harlé et Phelip 21 rue de la
Rochefoucauld
F-75009 Paris (FR)**

Jouve, 18, rue Saint-Denis, 75001 PARIS

EP 0 390 615 B1

## Description

L'invention concerne un dispositif de mesure opto-électronique à codage spectral.

Ce type de dispositif permet de mesurer des paramètres tels que la température, la pression, la position d'un objet ou d'un élément...

Dans un dispositif de ce type, une variation du paramètre mesuré introduit une variation de la différence de marche dans un interféromètre réglé à la teinte plate et éclairé par une source lumineuse à large spectre. Le spectre du flux lumineux à la sortie de l'interféromètre est fonction de la différence de marche et donc de la valeur du paramètre mesuré.

L'analyse du spectre de ce flux permet d'accéder à la valeur du paramètre.

De nombreux moyens ont été proposés pour procéder à cette analyse en particulier dans un article intitulé "Capteur de déplacement à interféromètres couplés par fibres multimodales" (OPTO 1985, 21/23 mai 1985) ARDITTY, BOSSELMANN, ULRICH ont proposé d'utiliser un interféromètre de MICHELSON pour procéder à cette analyse. Dans cet interféromètre, également réglé à la teinte plate, la mesure de la position relative des miroirs, lors de l'apparition de la remontée latérale de contraste de l'interférogramme, correspond à l'introduction par cet interféromètre d'une différence de marche égale et de signe contraire à celle introduite par le premier interféromètre. On accède donc ainsi à la différence de marche et par là à la valeur du paramètre que l'on cherche à mesurer.

L'objet de la présente invention est d'améliorer ce type de dispositif de mesure en proposant un système de détection statique dont le réglage et la mise en oeuvre soient particulièrement simples.

A cet effet, l'invention concerne un dispositif de mesure comportant un capteur optique, ledit capteur comprenant une source lumineuse à large spectre alimentant par une fibre optique, un interféromètre réglé à la teinte plate, un composant optique sensible au paramètre mesuré et introduisant dans l'interféromètre une différence de marche fonction de la valeur du paramètre mesuré, une liaison par fibres optiques reliant le capteur à des moyens d'analyse du flux lumineux sortant de l'interféromètre, lesdits moyens d'analyse comportant un photodétecteur et une unité de traitement des signaux fournis par ce photodétecteur.

Selon l'invention, les moyens d'analyse comportent un coin optique produisant des franges dont la position latérale et le contraste sont représentatifs du spectre du flux sortant de l'interféromètre et analysé par le photodétecteur. L'unité de traitement mesure la position du spectre cannelé et la convertit en la valeur du paramètre P.

L'invention sera décrite plus en détail en référence aux dessins dans lesquels :

- La figure 1 représente une vue schématique de l'ensemble du dispositif de mesure.
- La figure 2 représente un schéma de principe de l'obtention de franges par un coin optique.
- La figure 3 est une représentation des franges par rapport au coin optique.
- La figure 4 est un schéma de principe de réalisation d'un coin d'air.
- La figure 5 est une représentation schématique d'un exemple de réalisation de l'unité de traitement.

Le dispositif de mesure de l'invention comporte un capteur 10 comprenant un interféromètre 12 réglé à la teinte plate et un composant optique 13 sensible au paramètre mesuré P et introduisant dans l'interféromètre une différence de marche fonction de la valeur de ce paramètre.

La source 11 alimente par l'intermédiaire de la fibre ou du système de fibres optiques 17 le capteur 10.

L'interféromètre peut être de différents types, interféromètre à deux ondes ou interféromètre à ondes multiples, réglé à la teinte plate de telle manière qu'il produise un effet uniforme sur l'intégralité du faisceau entrant.

Cet interféromètre peut être un polarimètre constitué d'un polariseur 14 et d'un analyseur 15, le composant optique 13 comportant alors un élément biréfringent dont les propriétés varient selon la valeur du paramètre P. Ce peut être un cristal de KdP, de LiNbO$_3$...

L'interféromètre ou le polarimètre peut fonctionner en transmission comme représenté ou bien en réflexion.

La source lumineuse 11 est de préférence une diode électroluminescente ou une source incandescente. Dans certains cas, le faisceau qu'elle émet entre directement dans l'interféromètre 10. En d'autres cas, il est préférable d'étendre le faisceau par l'intermédiaire d'un système optique 16.

Le flux lumineux à la sortie de l'interféromètre 10 est transmis par un système de fibres optiques 20 aux moyens d'analyse 30.

Le système de fibres optiques 20 est avantageusement composé d'une fibre multimode.

Les moyens d'analyse comportent un deuxième interféromètre 31 produisant un interférogramme représentatif du spectre du flux transmis par le système de fibres 20.

Les signaux sortant de ce deuxième interféromètre 31 sont transmis par le photodétecteur 32 à une unité de traitement électronique 33 qui visualise la valeur du paramètre mesuré ou fournit une valeur électrique représentative de ce paramètre.

Selon l'invention, l'interféromètre 31 est constitué par un coin optique 34 qui reçoit un flux lumineux incident 35 produit par le système optique 36 à partir du flux lumineux sortant du système de fibres optiques 20.

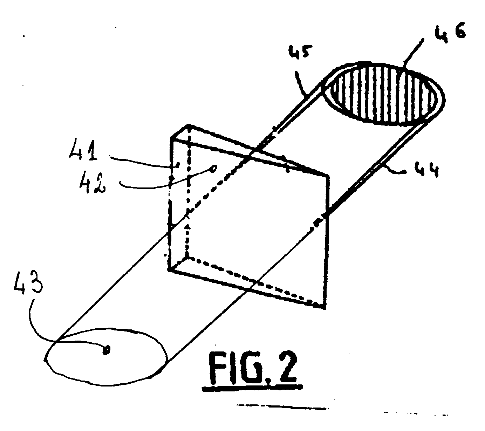

On appelle coin optique deux dioptres 41 et 42 (figure 2) proches l'un de l'autre et légèrement inclinés l'un par rapport à l'autre. Un flux lumineux 43 de lumière prallèle incident sur un tel coin optique est partiellement transmi et aussi réfléchi par les deux dioptres 41 et 42 produisant ainsi deux faisceaux 44 et 45 qui interfèrent et produisent des franges d'interférences 46. Les franges d'interférence constitutives de ce spectre cannelé sont localisées au niveau du coin optique. Le photodétecteur 32 utilisé pour leur analyse peut être soit localisé directement à proximité du coin optique soit il peut être préféré d'utiliser un système optique 50 réalisant la conjugaison optique desdites franges avec la surface réceptrice du photodétecteur et permettant donc l'éloignement de celui-ci par rapport au coin optique 34.

La qualité du système de franges obtenu est optimisée lorsque le coin optique 34 est de même nature que l'interféromètre 12 du capteur optique 10 de manière à produire en l'un de ses points, correspondant à la frange centrale, un effet optique exactement équivalent de celui introduit par l'interféromètre 12. Ainsi lorsque l'interféromètre 12 est un interféromètre de FIZEAU le coin 34 est un coin d'air dont les faces ont les mêmes coefficients de réflectivité que ceux de l'interféromètre.

Les franges produites par le coin 34 sont parallèles à son arête. Afin de permettre leur analyse, le photodétecteur 32 permet l'acquisition d'un signal représentatif d'une seule frange et la comparaison de son niveau à ceux des signaux correspondant aux franges voisines.

Il peut être composé de détecteurs élémentaires 37 de dimensions suffisamment petites. C'est par exemple une ou plusieurs barrettes, ou une matrice de dispositifs à transfert de charge (couramment appelés "CCD") ou un assemblage de photodétecteurs discrets. Ce photodétecteur 32 peut également être un tube cathodique.

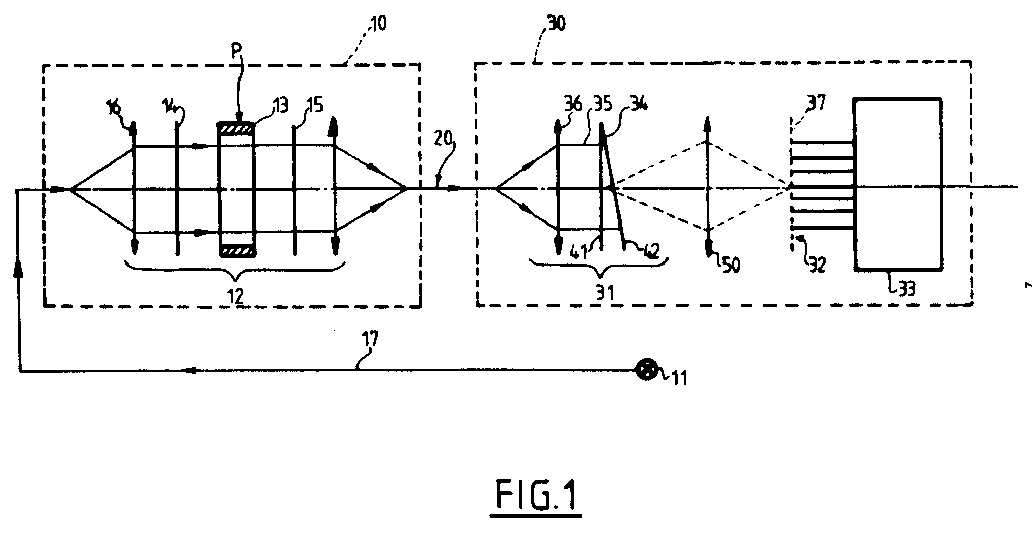

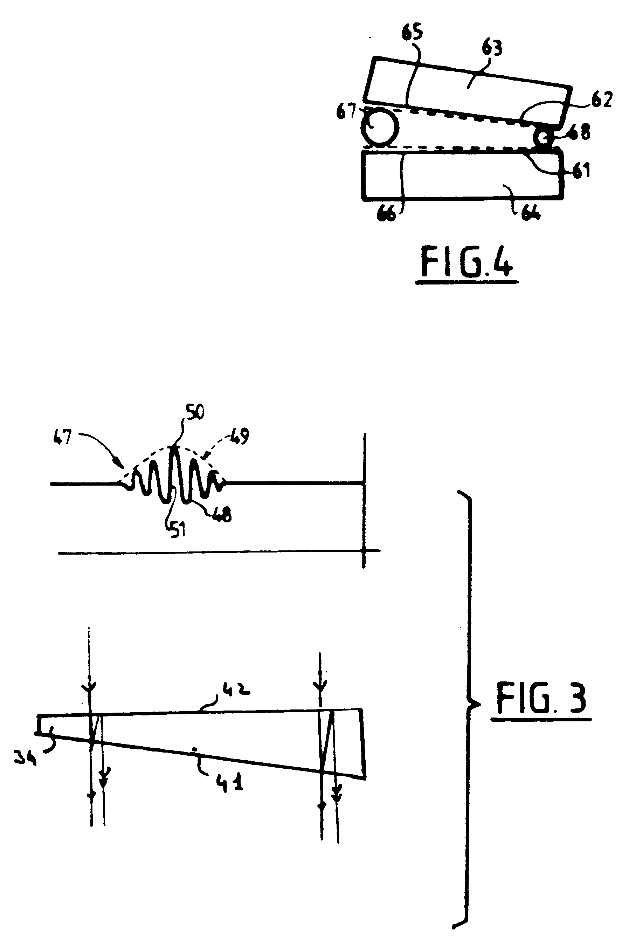

Le coin 34 peut être utilisé en transmission tel que représenté sur la figure 1 ou encore en réflexion tel que représenté sur les figures 2 et 3. Ce coin 34 peut être un coin de verre ou encore un coin d'air délimité par deux dioptres 61 et 62 tels que représentés sur la figure 4.

L'interférogramme fourni par l'interféromètre 31 est de la forme représentée sur la figure 3 dans laquelle on a représenté en abscisse la position des franges dans la direction perpendiculaire à l'arête du prisme 34 et en ordonnée l'énergie du signal lumineux.

Cet interférogramme 47 est constitué de franges 48 dont l'enveloppe est la courbe 49. La forme de la courbe 49 dépend du spectre de la source 11, sa position c'est-à-dire par exemple la position de son maximum 50 ou du maximum de la frange centrale 51 est fonction de la différence de marche introduite par l'élément 13 dans l'interféromètre 12 et donc de la valeur du paramètre P que l'on cherche à mesurer.

Le photodétecteur 32 permettant l'acquisition par l'unité de traitement 33 de données représentatives de la courbe 47, cette unité de traitement 33 a pour fonction de rechercher, selon les cas, soit la position de la frange centrale 51, soit la position du maximum de l'enveloppe 50. Elle fournit alors un signal électrique représentatif de cette valeur et donc de la valeur du paramètre P qui peut être utilisé à toute fin souhaitée par exemple pour visualiser la valeur du paramètre P.

De nombreux modes de réalisation de l'unité de traitement 33 sont envisageables.

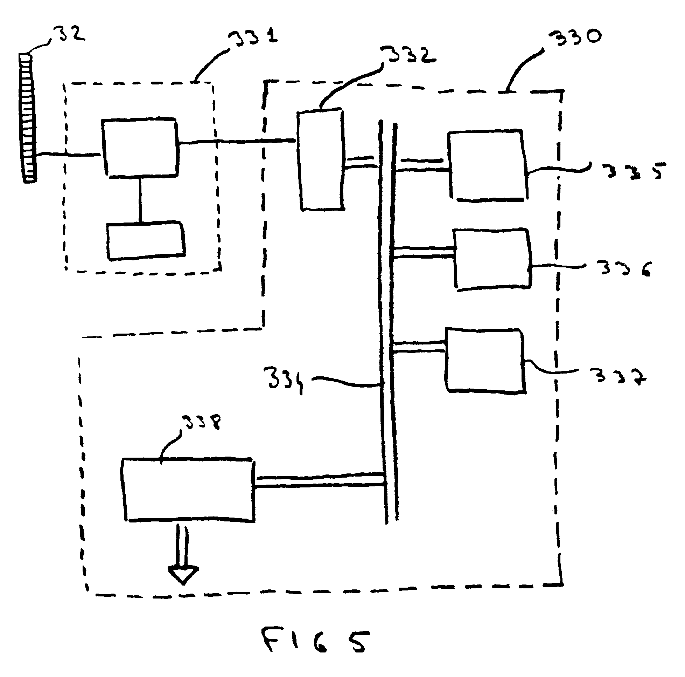

De manière préférée, cette unité de traitement 33 comporte une carte micro-processeur 330 (figure 5) alimentée à partir du photodétecteur 32 par l'intermédiaire d'une carte électronique spécialisée 331. La carte spécialisée 331 comporte une horloge 333.

La carte micro-processeur 330 comporte un convertisseur analogique numérique 332, un bus 334, une mémoire vive 335, un processeur 336 et une mémoire programmable de type PROM 337.

La carte spécialisée 331 transmet à la carte micro-processeur des données directement disponibles sur le bus 334 ce qui permet de charger ces données en temps réel dans la mémoire vive 335. Ces données sont analysées par le processeur 336 à l'aide d'un programme contenu dans la mémoire 337.

Un interface 338 qui peut être par exemple de type Rs 232 permet la communication extérieure par la transmission de données.

Ce programme a donc pour objet de rechercher la position des franges de manière à en déduire la valeur du paramètre P.

A cet effet, il recherche tout d'abord l'enveloppe 49 des franges puis par approximations successives détermine la hauteur de la frange la plus haute. Cette hauteur permet de déterminer la position latérale du maximum de contraste et donc du paramètre P.

La forme de chacune des franges 48 dépend du coefficient de réflexion et dioptres constitutifs du coin optique 34. Dans le cas du coin d'air, un coefficient de réflexion élevé assure un fonctionnement du type "FABRY-PEROT" produisant des franges fines alors qu'un coefficient de réflexion faible conduit à un fonctionnement de type "FIZEAU" c'est-à-dire des franges sensiblement sinusoïdales. Les deux types de fonctionnement sont envisageables. Toutefois, un fonctionnement de type intermédiaire avec des coefficients de réflexion de 30 à 40% sera généralement préféré.

Un coin d'air peut avantageusement être réalisé tel que représenté sur la figure 4 à l'aide de deux lames optiques 63 et 64 comportant chacune une face plane 65, 66, face à face recouvertes chacune d'un traitement 61, 62 et séparées par deux entretoises 67, 68 cylindriques, de diamètres différents. Comme nous l'avons vu plus haut, le choix du traitement permet de déterminer le coefficient de réflexion et donc la forme de chacune des franges 48, l'angle réalisé entre les faces 65 et 66 détermine le pas de ces franges 48. Les entretoises 68 et 67 peuvent avantageusement être constituées d'éléments de fibres optiques.

Selon un mode de réalisation préféré, on obtient une précision de détection suffisante lorsque la largeur d'une frange 48 correspond au moins à la largeur de quatre détecteurs élémentaires 37. Lorsque la longueur d'onde moyenne de la source 11 est de l'ordre de 0,6μm, un prisme ayant un angle d'environ 0,005 radian produit un système de frange dont l'interfrange est d'environ 60μm. Il est alors possible d'utiliser des détecteurs élémentaires 37 de 15μm de large. Il est préférable que l'angle d'incidence du flux lumineux sur le coin optique 34 soit nul par rapport à la normale ce qui permet de s'affranchir des abérrations de la lame.

Le système optique 50 peut être un système optique classique produisant une image du plan des franges sur le détecteur 32.

On peut également utiliser deux lentilles cylindriques, la première d'axe parallèle à l'arête du coin 34 ayant une focale permettant l'adaptation du pas des franges aux dimensions des détecteurs élémentaires 37 et la deuxième perpendiculaire à la première assurant la concentration de l'énergie contenue dans ces franges.

Afin d'augmenter la résolution du système d'analyse pour un angle donné du coin 34 et une dimension donnée des détecteurs élémentaires 37, on peut placer entre le coin 34 et le détecteur 32 une mire de traits opaques dont le pas est égal au pas des franges en sortie de l'interféromètre en coin et dont les traits sont parallèles aux franges d'interférence. Cette mire encore appelée réseau de RONCHI permet la mise en oeuvre d'une méthode de MOIRE : lorsque la mire opaque est positionnée de telle sorte qu'elle masque les franges sombres, le signal produit représente les variations positives autour de la valeur moyenne alors que lorsqu'elle masque les franges claires, elle fournit un signal représentant les variations négatives. On moyenne alors ce signal de manière à obtenir un signal monotone dont le maximum ou le minimum sera situé à l'endroit du contraste maximum.

Par contre, lorsque la mire est quadrature par rapport aux franges, le signal produit, uniforme, ne peut être exploité. Pour éviter cette difficulté, on utilise deux réseaux de RONCHI, en quadrature l'un par rapport à l'autre et chacun placé devant une barrette de détecteurs élémentaires 37. L'une au moins des barrettes fournit alors un signal utilisable. Le signal qui présente la plus grande dérivée est celui pour lequel l'accord de phase est le mieux réalisé et qui est exploité.

Une autre possibilité consiste à multiplexer les deux signaux correspondants à des réseaux de RONCHI en quadrature sur le même détecteur. A cet effet, un reseau constitué de zones de la largeur d'un détecteur élémentaire 37, alternativement en phase et en quadrature est utilisé. A la sortie de la barrette composée d'un ensemble de détecteurs élémentaires 37 le signal est démodulé et fournit au moins un signal utilisable.

**Revendications**

1. Dispositif de mesure comportant
   - une source lumineuse (11) à large spectre alimentant par une fibre optique (17) un capteur optique (10),
   - ledit capteur (10) comprenant un interféromètre (12) réglé à la teinte plate, un composant optique (13) sensible au paramètre P mesuré et introduisant dans l'interféromètre (12) une différence de marche fonction de valeur du paramètre P mesuré,
   - une liaison par fibres optiques (20) reliant le capteur (10) à des moyens d'analyse (30) du flux lumineux sortant de l'interféromètre (10),
   - lesdits moyens d'analyse comportant un photodétecteur (32) et une unité de traitement (33),
   caractérisé en ce que les moyens d'analyse (30) comportent un coin optique (34) produisant des franges dont la position latérale et le contraste sont représentatifs du spectre du flux sortant de l'interféromètre (10) et analysé par le photodétecteur (32), l'unité de traitement mesurant la position latérale desdites franges et la convertissant en la valeur du paramètre P.

2. Dispositif selon la revendication 1, caractérisé en ce que le coin optique (34) est un coin d'air.

3. Dispositif selon la revendication 2, caractérisé en ce que le coin d'air (34) comporte deux lames planes (63, 64) séparées par deux cales cylindriques (67, 68) de diamètres différents.

4. Dispositif selon la revendication 1, caractérisé en ce que le coin optique est un prisme d'indice supérieur à 1.

5. Dispositif selon la revendication 1, caractérisé en ce que le coin optique (34) est de même nature que l'interféromètre (12) du capteur optique (10) de manière à produire en l'un de ses points un effet optique exactement équivalent de celui introduit par l'interféromètre.

6. Dispositif selon l'une quelconque des revendications 1 à 5, caractérisé en ce que les faces du coin optique (34) ont un coefficient de réflectivité compris entre 30% et 50%.

7. Dispositif selon l'une quelconque des revendications 1 à 6, caractérisé en ce que le faisceau lumineux incident est normal à face d'entrée du coin optique (34).

8. Dispositif selon l'une quelconque des revendications 1 à 7, caractérisé en ce que l'unité de traitement (33) permet de connaître la position de la frange centrale du signal par la détection du maximum de contraste.

9. Dispositif selon l'une quelconque des revendications 1 à 7, caractérisé en ce que l'unité de traitement (33) permet de connaître la position de la frange centrale du système d'interférence par la détection du maximum de l'enveloppe du signal.

10. Dispositif selon l'une quelconque des revendications 1 à 9, caractérisé en ce que une ou plusieurs grilles d'analyse permettant la réalisation de figures de MOIRE sont interposées entre les franges produites par le coin (34) et le détecteur (32).

## Patentansprüche

1. Messvorrichtung mit
   - einer Lichtquelle (11) mit breitem Spektrum, die einen optischen Sensor (10) über eine optische Faser (17) speist,
   - wobei der Sensor (10) ein auf Unifarbe eingestelltes Interferometer (12) und ein für den gemessenen Parameter P empfindliches optisches Element (13) aufweist, das in das Interferometer (12) eine Phasenverschiebung einbringt, die eine Funktion des Wertes des gemessenen Parameters P ist,
   - einer Verbindung aus optischen Fasern (20), welche den Sensor (10) mit einer Einrichtung (30) zum Analysieren des das Interferometer (12) verlassenden Lichtstromes verbindet,
   - wobei die Analyseeinrichtung einen Photodetektor (32) und eine Verarbeitungseinheit (33) aufweist,
   dadurch gekennzeichnet, daß die Analyseeinrichtung (30) einen optischen Keil (34) aufweist, der Streifen erzeugt, deren seitliche Position und deren Kontrast für das Spektrum des das Interferometer (12) verlassenden und von dem Photodetektor (32) analysierten Stromes repräsentativ sind, wobei die Verarbeitungseinheit die Position der Streifen misst und sie zum Wert des Parameters P umwandelt.

2. Vorrichtung nach Anspruch 1, dadurch gekennzeichnet, daß der optische Keil (34) ein Luftkeil ist.

3. Vorrichtung nach Anspruch 2, dadurch gekennzeichnet, daß der Luftkeil (34) zwei ebene Platten (63, 64) aufweist, die durch zwei zylindrische Zwischenlagen (67, 68) mit unterschiedlichen Durchmessern voneinander getrennt sind.

4. Vorrichtung nach Anspruch 1, dadurch gekennzeichnet, daß der optische Keil ein Prisma mit einem Index größer als 1 ist.

5. Vorrichtung nach Anspruch 1, dadurch gekennzeichnet, daß der optische Keil (34) von der gleichen Art ist wie das Interferometer (12) des optischen Sensors (10), derart, daß es an einem seiner Punkte einen optischen Effekt erzeugt, der genau äquivalent demjenigen ist, der durch das Interferometer eingebracht wird.

6. Vorrichtung nach einem der Ansprüche 1 bis 5, dadurch gekennzeichnet, daß die Flächen des optischen Keils (34) einen Reflexionskoeffizienten zwischen 30% und 50% haben.

7. Vorrichtung nach einem der Ansprüche 1 bis 6, dadurch gekennzeichnet, daß der einfallende Lichtstrahl enkrecht zur Eintrittseite des optischen Keils (34) ist.

8. Vorichtung nach einem der Ansprüche 1 bis 7, dadurch gekennzeichnet, daß die Verarbeitungseinheit (33) das Erkennen der Position des Mittelstreifens des Signals durch Ermittlung des Maximalkontrasts ermöglicht.

9. Vorrichtung nach einem der Ansprüche 1 bis 7, dadurch gekennzeichnet, daß die Verarbeitungseinheit (33) das Erkennen der Position des Mittelstreifens des Interferenzsystems durch Ermittlung des Maximums der Hüllkurve des Signals ermöglicht.

10. Vorrichtung nach einem der Ansprüche 1 bis 9, dadurch gekennzeichnet, daß zwischen den von dem Winkel (34) gebildeten Streifen und dem Detektor (32) ein oder mehrere Analysegitter angeordnet sind, welche die Bildung von Moiré-Figuren ermöglichen.

## Claims

1. Measurement device including
   - a broad-spectrum light source (11) supplying an optical sensor (10) via an optical fibre (17),
   - the said sensor (10) comprising an interferometer (12) adjusted for flat tint, an optical component (13) sensitive to the parameter P measured and introducing into the interferometer (12) a path difference which is a function of the value of the parameter P measured,
- an optical-fibre link (20) connecting the sensor (10) to means (30) for analysing the light flux exiting the interferometer (10),
- the said analysis means including a photodetector (32) and a processing unit (33), characterised in that the analysis means (30) include an optical wedge (34) producing fringes, the lateral position and the contrast of which are representative of the spectrum of the flux exiting the interferometer (10) and analysed by the photodetector (32), the processing unit measuring the lateral position of the said fringes and converting it into the value of the parameter P.

2. Device according to Claim 1, characterised in that the optical wedge (34) is an air wedge.

3. Device according to Claim 2, characterised in that the air wedge (34) includes two plane plates (63, 64) which are separated by two cylindrical spacers (67, 68) of different diameter.

4. Device according to Claim 1, characterised in that the optical wedge is a prism of index greater than 1.

5. Device according to Claim 1, characterised in that the optical wedge (34) is of the same kind as the interferometer (12) of the optical sensor (10) so as to produce at one of its points an optical effect exactly equivalent to that introduced by the interferometer.

6. Device according to any one of Claims 1 to 5, characterised in that the faces of the optical wedge (34) have a coefficient of reflectivity of between 30% and 50%.

7. Device according to any one of Claims 1 to 6, characterised in that the incident light beam is normal to the entrance face of the optical wedge (34).

8. Device according to any one of Claims 1 to 7, characterised in that the processing unit (33) enables the position of the central fringe of the signal to be known by detecting the contrast maximum.

9. Device according to any one of Claims 1 to 7, characterised in that the processing unit (33) enables the position of the central fringe of the interference system to be known by detecting the maximum of the envelope of the signal.

10. Device according to any one of Claims 1 to 9, characterised in that one or more analysis gratings permitting the production of Moiré patterns are interposed between the fringes produced by the wedge (34) and the detector (32).

FIG.1

**FIG. 2**

FIG.4

FIG. 3

FIG 5